Europäisches Patentamt

European Patent Office

Office européen des brevets

(11) Publication number: **0 084 916**
**B1**

(12) **EUROPEAN PATENT SPECIFICATION**

(45) Date of publication of patent specification: **27.12.85**

(21) Application number: **83200086.3**

(22) Date of filing: **20.01.83**

(51) Int. Cl.⁴: **E 05 G 7/00, B 60 P 3/03**

(54) **Protective transfer tunnel arrangement.**

(30) Priority: **21.01.82 NL 8200228**

(43) Date of publication of application:
**03.08.83 Bulletin 83/31**

(45) Publication of the grant of the patent:
**27.12.85 Bulletin 85/52**

(84) Designated Contracting States:
**AT BE CH DE FR GB IT LI LU SE**

(56) References cited:
**FR-A-2 313 532**
**GB-A- 21 712**
**GB-A- 100 420**
**GB-A- 166 947**
**NL-A-7 512 086**
**US-A-1 647 572**
**US-A-3 121 243**
**US-A-3 507 409**

(73) Proprietor: **Staat der Nederlanden**
**(Staatsbedrijf der Posterijen, Telegrafie en Telefonie)**
**P.O. Box 430**
**NL-2260 AK Leidschendam (NL)**

(72) Inventor: **Koehler, Willem Gerardus**
**260 Thorbeckelaan**
**NL-2564 BW The Hague (NL)**

Courier Press, Leamington Spa, England.

## Description

The present invention relates to a protective transfer tunnel arrangement for transferring goods (valuables) from one station to another station, comprising: a first tubular section mounted within an opening in a wall of one of said stations; a second tubular section slidably mounted within said first tubular section; and closing means for selectively closing and opening the transfer path of said tunnel arrangement.

An arrangement of the type described above is known from the Netherlands patent application 7512086, which was laid open to public inspection on April 19, 1977.

With such a prior art arrangement the opening in the wall supporting the arrangement is closed by means of a sliding door. Therefore a rather complicated window structure is required which is less attractive from various points of view (security, reliability and simplicity). Moreover this known arrangement has the inherent deficiency that for enabling the establishment of a protective connection between two stations, for instance an armoured truck and a building, it is required to slide away the sliding door first. Consequently, when moving the slidable tunnel section in or out the one station (armoured truck), a portion of the transfer tunnel arrangement extending within the interior of said one station, is accessible from the outside; from a security point of view this is a drawback.

U.S. patent 1,647,572 relates to a protective transfer shield for use in connection with armoured automobiles etc. for the purpose of transferring, loading and unloading valuables, money and jewels etc. from such vehicles and protecting them during such transfer. This prior art shield includes a tunnel arrangement in which two doors are required. With such an arrangement the outer door, when moved out from the armoured motor-car, has to be opened by personnel within the building. From a practical and security point of view this is disadvantageous. This prior art is inappropriate in case it should be required that said outer door is a heavy armoured door.

U.S. patent 3,507,409 describes a tunnel arrangement having substantially the same deficiencies as have been described in relation to the above-mentioned prior art. The outermost free end of a carrier tube has a door hinged therein; although this door can be operated from the inside of the armoured car, a rather complicated and vulnerable electro-mechanical device is required to lock and unlock said door. Moreover, the building is necessarily closed by means of a sliding door, which results to a vulnerable and complicated structure in the wall of a building.

It is an object of the subject invention to overcome the technical deficiencies outlined above. More in particular it is an object to improve the prior art arrangements described above, so as to provide a structure which can be conveniently and effectively mounted in buildings without disrupting the solidity of the front wall thereof at the position where the tunnel arrangement is mounted therein.

A protective transfer tunnel arrangement of the above described type is according to the invention characterized by a third tunnel section mounted within the interior of said first tunnel section and said second tunnel section, said third tunnel section at its one end being fixedly attached to said first tunnel section and being further provided with a door constituting said closing means and attached to the other end of said third tunnel section for closing said third tunnel section; said second tunnel section being slidably mounted relative to said other end and between said first and said third tunnel sections.

A transfer tunnel arrangement of the subject invention is burglary secured to a large extent, and permits the use of a single armoured door without degrading the reliability of the operation.

From the security point of view it is further highly advantageous that said door can be operated with very simple and reliable means, solely from the interior of the station (building) wherein the transfer tunnel arrangement has been mounted.

Further improvements and alternative embodiments are described in the sub-claims 2 through 9.

Other objects and advantages of the invention will be apparent from the following description thereof having reference to the accompanying drawings, illustrative of one embodiment of the invention, and wherein like reference characters indicate like parts. In the drawings:

Fig. 1 is a perspective view of the transfer hatch with the slidable tunnel extended and the position of the door in the inner tunnel;

Fig. 2 is a sectional view of a money transport vehicle parked near a transfer hatch mounted in a wall;

Fig. 3 is a sectional view of the transfer hatch taken along line III—III of Fig. 5, with the slidable tunnel withdrawn;

Fig. 4 is a sectional view of the transfer hatch taken along line IV—IV of Fig. 5 with the slidable tunnel withdrawn;

Fig. 5 is a sectional view of the transfer hatch taken along line V—V of Fig. 3, with the slidable tunnel withdrawn.

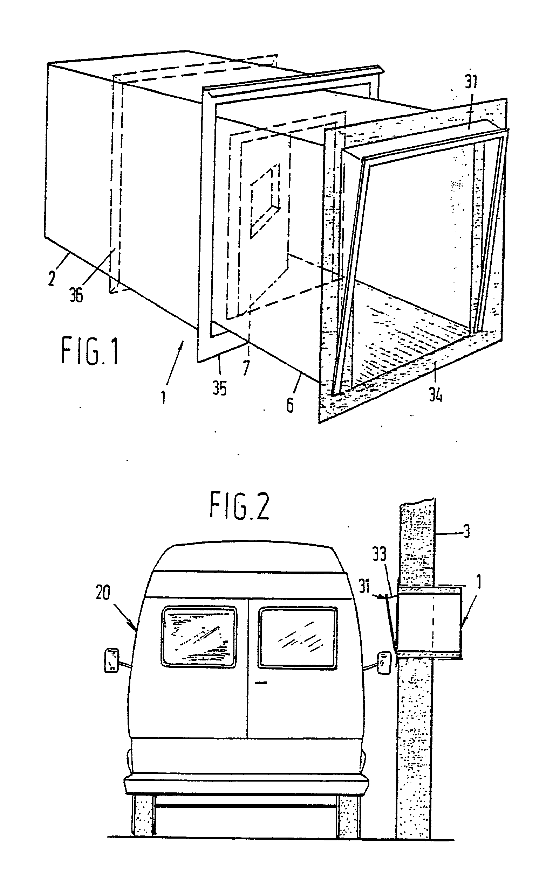

As shown in the drawing the transfer hatch 1 (see Fig. 1) comprises a fixed outer tunnel 2, which can be put through an opening in a wall 3 (see Fig. 2). At some distance from its inside the outer tunnel is provided with a fixed inner tunnel 4, one end of which is stiffly connected with a corresponding end of the fixed outer tunnel 2 by means of a profiled connecting frame 5. A slidable tunnel 6, which can be withdrawn and extended, is placed between said two fixed tunnels 2 and 4 via their free ends. By making use of e.g. a profile which is not further described, the distance between the fixed tunnels, specifically with regard to their bottom parts, and preferably at their free ends, can thus be chosen that in this case it is somewhat greater than the thickness of the plate the slidable tunnel is made of. Owing to a lubricant the slidable tunnel can be withdrawn and extended in an easily slidable way. The purpose of this construction is that the free end of the inner tunnel will hardly bend. Especially in the case of a very heavy transfer hatch, e.g. when it is made of armour steel, it is essential for a smooth working that the inner tunnel will not bend at its free end. This bending will considerably increase because of the fact that a door 7 is located at the free end of the inner tunnel, which door will cause an extra bending force in case it is also made of armour steel. This bending force can be considerably received by making the profiled connecting frame 5 heavy enough, but it is obvious that in that case the whole construction will be very substantial.

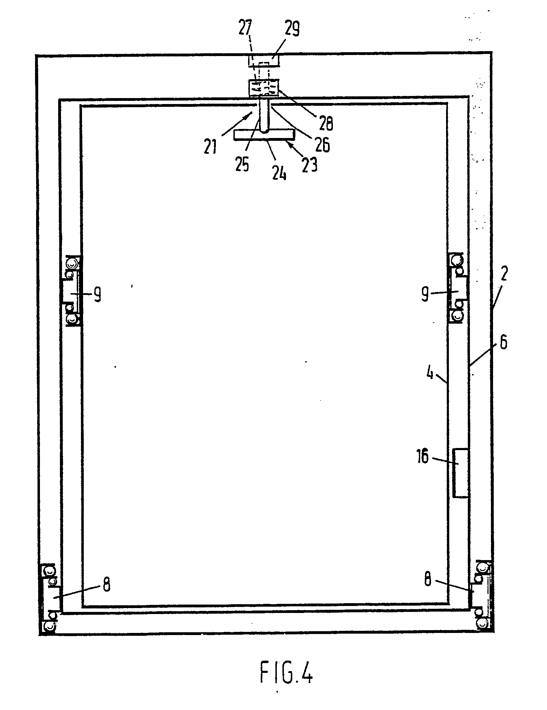

Instead of using a lubricant for the sliding of the slidable tunnel 6 between the two fixed tunnels 2 and 4 a construction of guide rails is preferably used. As shown in Fig. 4 the slidable tunnel 6 can be withdrawn and extended by means of guide rails 8 and 9 coupled to the outer tunnel 2 and the inner tunnel 4, respectively. A possible bending of the free end of the inner tunnel 4 will then be transmitted via the guide rails and the slidable tunnel 6 to the outer tunnel 2 and received.

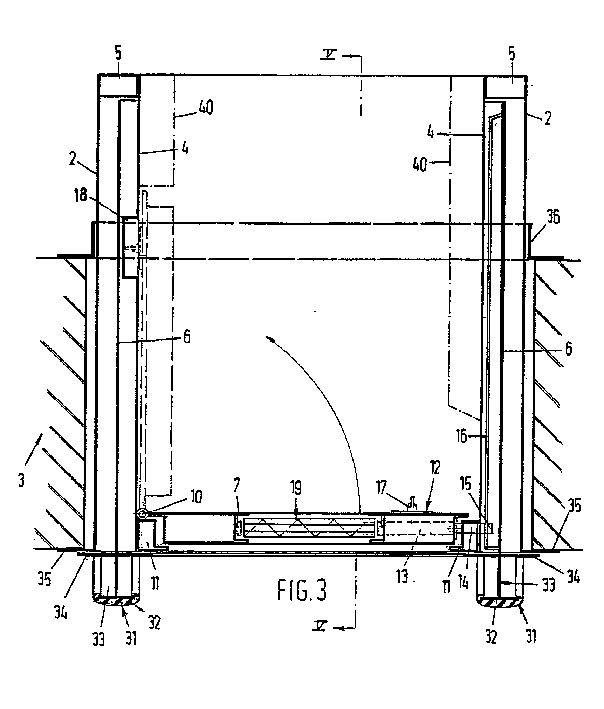

As shown in Fig. 3 the door 7, located in the inner tunnel 4, is pivotally mounted by means of a hinge 10 to the door frame 11, connected to the inner tunnel 4. The door 7 is provided with a door locking mechanism 12, comprising a lock 13, the bolt 14 of which can pass through the door frame 11 to lock the door with regard to the fixed inner tunnel 4, as well as through a hole 15 in a striking plate 16, mounted to the slidable tunnel 6. The position of the hole 15 is such that when the slidable tunnel is withdrawn, it is opposite the bolt. Now when the door is partly unlocked by means of a key 17, i.e. the bolt 14 is removed only from the hole 15, the slidable tunnel 6 can be moved outwards, whereas the inner tunnel 4 remains closed off, for the bolt is still in the door frame 11. Only when the operator has removed the bolt from the door frame 11 as well, the inner tunnel will become accessible.

When the key 17 has not been removed from the lock, the door 7 will, in its open position, not run parallel to the inner wall of the inner tunnel. This problem can be overcome by removing the key from the lock, but then there is a chance that the key will get lost, which may have unpleasant consequences, when it is needful to lock the door quickly. To cope with this inconvenience the inner wall of the inner tunnel has been provided with a recess 18 at the height of the key 17 in the lock, the depth of which recess is at least equal to the length of that part of the key 17 which is not in the lock. The door can be provided with a window 19, preferably made of bulletproof glass, so that the operator can have visual contact with a vehicle 20, e.g. a money transport car (see Fig. 2).

For safety's sake it is desirable that the transfer hatch 1 can only be operated from inside the protected room. In the case of Fig. 2 it is the room to the right of the wall 3.

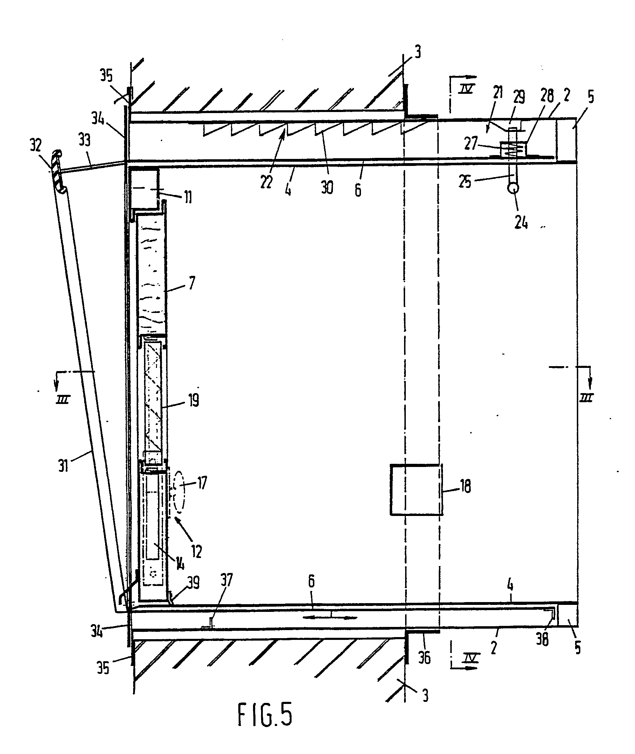

As already pointed out, the door 7 is opened from inside the inner tunnel 4, that is from inside the protected room. It has also been pointed out that the slidable tunnel 6 can be moved outwards, after the bolt 14 has been removed from the hole 15. As can be seen from Fig. 5 a locking mechanism 21 for the slidable tunnel which is preferably mounted in the upper surface of the transfer hatch, and can be operated from inside the inner tunnel 4, has been provided, so that said slidable tunnel 6 can also be moved outwards from inside the protected room. This locking mechanism 21 comprises a toothed rack 22, which is mounted to the inner side of the outer tunnel 2 and the centre line of which runs parallel to the centre line of the outer tunnel, and a draw latch 23, coupled to the slidable tunnel 6. The draw latch 23 is provided with a handle 24 and coupled to this a latch bolt 25, which passes through a slot 26 in the inner tunnel 4 (see Fig. 4) as well as through the slidable tunnel 6. Against the working of a spring 27 placed in a housing 28, which is mounted to the outside of the slidable tunnel 6, the latch bolt 25 can be drawn from the latch catch 29, which is mounted to the inner side of the outer tunnel 2. The slot 26 is located parallel to and under the toothed rack 22.

After the bolt 14 (see Fig. 3) has been removed from the hole 15, and after the draw latch 23 has been drawn from the latch catch 29, the slidable tunnel can be pushed outwards from inside the transfer hatch 1, i.e. from inside the protected room, the latch bolt 25 moving through the slot 26 and taking along the slidable tunnel 6 via the housing 28. Dependent on the extent of moving out the slidable tunnel 6 the latch bolt will, after the release of the draw latch 23, snap behind one of the teeth 30 of the toothed rack 22, the teeth 30 being thus placed that the slidable tunnel 6 will be blocked in the direction of its withdrawn position. As shown in Fig. 2 the extent of moving out the slidable tunnel 6 is determined by the distance from the vehicle 20 to the transfer hatch 1. In case the vehicle is a money transport car provided with a hatch which is not described in detail, the slidable tunnel 6 can be moved into this hatch after opening the same. The advantage of this circumstance is that a fully secured transfer of e.g. money can take place between the protected room and the money transport car. The persons in the money transport car need not come out of the car neither need they put their hands out of the hatch to receive or to hand over money, so that it has become very unattractive to commit a hold-up.

In order to ensure the best possible joining between the slidable tunnel 6 and the body of the vehicle, the outside of the former has been provided with a hood 31, which is movable or immovable with regard to said slidable tunnel. This hood 31 is provided at its free end with a soft material 32 to prevent the vehicle 20 from being damaged. Moreover, the shape of the hood 31 is such that it can mainly join the body of the vehicle. Owing to the slanting position of the hood 31 it forms at its upper side a canopy 33 (see Figs. 2 and 5), which can also serve as a drain for carrying off water.

To ensure that no water or dirt can come between the two fixed tunnels 2 and 4, when the slidable tunnel 6 is in its withdrawn position, this tunnel has been provided with a sealing flange 34, mounted in such a way that when the slidable tunnel 6 is in its withdrawn position, this sealing flange closes off the room between the two fixed tunnels 4 and 6. In case a hood 31 is made use of, it can be mounted to said sealing flange 34.

To ensure that the transfer hatch 1 is firmly mounted in the wall 3 of the protected room, the outer tunnel 2 is provided at its free end with a first fixed clamping frame 35 pointing outwards and with a second clamping frame 36 also pointing outwards and movably mounted, with regard to the first clamping frame 35, along the outer tunnel 2.

As clearly indicated in Figs. 3 and 5 the first clamping frame 35 joins the wall 3. The second clamping frame 36 is then moved in such a way that the transfer hatch 1 is clamped against the wall. The second clamping frame 36 is locked by means of locking means, which are not described in detail.

Fig. 5 also shows a pair of stop brackets 37 and 38, the former of which is fixedly mounted to the inner side of the outer tunnel 2, whereas the latter is fixedly mounted to the outside of the slidable tunnel 6. Said stop brackets 37 and 38 are mounted in such a way that when the slidable tunnel has reached its maximum allowable extension, the stop bracket 38 of this tunnel butts against the stop bracket 37, thus preventing the slidable tunnel 6 from falling out with regard to its two fixed tunnels 2 and 4.

In the inner tunnel 4 the door 7 can be provided with a draught strip 39 near the bottom threshold.

The inner side of the transfer hatch 1 may also be provided with a gas-tight sealing, which is not further described, to preclude any form of draught, as well as to prevent that undesirable gas will be blown into the protected room.

To obtain a quick transfer of e.g. money-bags or containers, it is desirable that the inner wall is as smooth as possible. Obstacles that are in the way are the open door 7, the draw latch 23 and the door frames 11. A transfer plane which is as smooth as possible can be obtained by means of guide strips 40, mounted in the inner tunnel 4, indicated by dot and dash lines in Fig. 3, and lined up with the above obstacles.

**Claims**

1. Protective transfer tunnel arrangement for transferring goods (valuables) from one station to another station, comprising:
a first tubular section (2) mounted within an opening in a wall of one of said stations;
a second tubular section (6) slidably mounted within said first tubular section; and
closing means (7) for selectively closing and opening the transfer path of said tunnel arrangement,
characterized by a third tunnel section (4) mounted within the interior of said first tunnel section (2) and said second tunnel section (6), said third tunnel section (4) at its one end being fixedly attached to said first tunnel section (2) and being further provided with a door (7) constituting said closing means and attached to the other end of said third tunnel section (4) for closing said third tunnel section (4); said second tunnel section (6) being slidably mounted relative to said other end and between said first (2) and said third (4) tunnel sections.

2. Protective transfer tunnel arrangement according to claim 1, characterized in that said first (2) and said third (4) sections are interconnected by means of a profiled connecting frame (5), which is designed in such a manner that said other end of said third tunnel section (4) is held substantially stationary relative to said first tunnel section (2).

3. Protective transfer tunnel arrangement according to claim 1 or 2, characterized in that said second tunnel section (6) is further slidably mounted on said third tunnel section (4).

4. Protective transfer tunnel arrangement according to one or more of the foregoing claims 1—3, characterized in that said door (7) is provided with a locking mechanism (12), which is adapted to latch said second tunnel section (6) relative to said third tunnel section (4), in addition to latching said door (7) therein.

5. Protective transfer tunnel arrangement in accordance with one or more of the claims 1—4, characterized in that the slidable second tunnel section (6) is provided with a striking plate (16), which has a hole (15) in such a position that when the slidable second tunnel section (6) is in its withdrawn position, the night bolt (14) of the door locking mechanism (12) can engage the hole (15).

6. Protective transfer tunnel arrangement in accordance with one or more of the preceding claims 1—5 characterized in that a locking mechanism (21) for the slidable second tunnel section (6) has been provided, so that this tunnel section can be locked in a number of moved-out positions.

7. Protective transfer tunnel arrangement in accordance with claim 6, characterized in that the locking mechanism (21) for the slidable second tunnel section (6) comprises a toothed rack (22) mounted to the inner side of the outer first tunnel section (2), and a draw latch (23) coupled to the slidable second tunnel section (6) and provided with a latch bolt (25), which is movable in its axial direction against the force of spring means (27), one end of which latch bolt passes through a slot (26) located in the inner third tunnel section (4) and running parallel to the toothed rack and the other end rests on the latch catch (29), when the slidable second tunnel section (6) is in its withdrawn position, and when the slidable second tunnel section is in its extended position, the spring latch-bolt (25), which is movable in its axial direction, snaps behind one of the teeth (30) of the toothed rack (22) for blocking the slidable second tunnel section in the direction of its withdrawn position.

8. Protective transfer tunnel arrangement in accordance with one or more of the claims 1—7, characterized in that the slidable second tunnel section (6) is provided with a sealing flange (34) for sealing the room between the two fixed tunnels (2, 4), when the slidable second tunnel section is in it withdrawn position.

9. Protective transfer tunnel arrangement in accordance with one or more of the claims 1—8, characterized in that the outer first tunnel section (2) is provided at its free end with a first fixed clamping frame (35) pointing outwards, and with a second clamping frame (36) also pointing outwards and movably mounted, with regard to the first clamping frame, along the outer first tunnel section.

**Revendications**

1. Dispositif de tunnel de transfert protecteur destiné à transférer des biens (des valeurs) d'une station à une autre, comprenant: une première section tubulaire (2) montée dans une ouverture ménagée dans une paroi ou un mur de l'une desdites stations; une deuxième section tubulaire (6) montée coulissante dans ladite première section tubulaire; et des moyens de fermeture (7) destinés à fermer et ouvrir sélectivement le passage de transfert dudit dispositif de tunnel, caractérisé par une troisième section de tunnel (4) montée dans le volume intérieur de la première section de tunnel (2) et de la deuxième section de tunnel (6), ladite troisième section de tunnel (4) étant fixée rigidement à ladite première section de tunnel (2) à l'une des extrémités et étant en outre munie d'une porte (7) qui constitue lesdits moyens de fermeture et qui est fixée à l'autre extrémité de ladite troisième section de tunnel (4) pour fermer ladite troisième section de tunnel (4); ladite deuxième section de tunnel (6) étant montée coulissante par rapport à l'autre extrémité et entre la première (2) et la troisième (4) des sections du tunnel.

2. Dispositif de tunnel de transfert protecteur selon la revendication 1, caractérisé en ce que ladite première section (2) et ladite troisième section (4) sont assemblées au moyen d'un cadre d'assemblage profilé (5) qui est construit de telle manière que ladite autre extrémité de ladite troisième section de tunnel (4) soit maintenue fixe par rapport à ladite première section de tunnel (2).

3. Dispositif de tunnel de transfert protecteur selon la revendication 1 ou la revendication 2, caractérisé en ce que ladite deuxième section de tunnel (6) est en outre montée coulissante sur ladite troisième section de tunnel (4).

4. Dispositif de tunnel de transfert protecteur selon une ou plusieurs des revendications précédentes 1 à 3, caractérisé en ce que ladite porte (7) est munie d'un mécanisme de verrouillage (12) qui est adapté pour verrouiller ladite deuxième section (6) du tunnel par rapport à ladite troisième section (4) du tunnel, en supplément du verrouillage de ladite porte (7) dans cette section.

5. Dispositif de tunnel de transfert protecteur selon une ou plusieurs des revendications 1 à 4, caractérisé en ce que la deuxième section coulissante (6) du tunnel est munie d'une plaque de gâche (16) qui présente un trou (15) dans une position telle que, lorsque la deuxième section ou section coulissante (6) du tunnel se trouve dans sa position rétractée, le pêne ou verrou de nuit (14) du mécanisme (12) de verrouillage de la porte puisse s'engager dans le trou (15).

6. Dispositif de tunnel de transfert protecteur selon une ou plusieurs des revendications 1 à 5 précédentes, caractérisé en ce qu'un mécanisme de verrouillage (21) a été prévu pour la deuxième section ou section coulissante (6) du tunnel de manière que cette section du tunnel puisse être verrouillage dans un certain nombre de positions d'extension.

7. Dispositif de tunnel de transfert protecteur selon la revendication 6, caractérisé en ce que le mécanisme de verrouillage (21) agissant sur la deuxième section ou section coulissante (6) du tunnel comprend une crémaillère (22) montée sur la face interne de la première section ou section extérieure (2) du tunnel et un verrou à pêne à ressort (23) accouplé à la deuxième section ou section coulissante (6) du tunnel et muni d'un pêne à ressort (25) qu'on peut déplacer dans sa direction axiale à l'encontre de la force de moyens de ressort (27), une extrémité de ce pêne passant à travers une fente (26) prévue dans la troisième section ou section intérieure (4) du tunnel et qui d'étend parallèlement à la crémaillère, et l'autre extrémité s'appuyant sur une gâche (29) lorsque la deuxième section ou section coulissante (6) du tunnel se trouve dans sa position rétractée tandis que, lorsque la deuxième section ou section coulissante du tunnel est dans sa position d'extension, le pêne à ressort (25) qui est mobile dans sa direction axiale s'encliquette derrière l'une des dents (30) de la crémaillère (22) pour bloquer la deuxième section ou section coulissante du tunnel dans le sens allant vers sa position rétractée.

8. Dispositif de tunnel de transfert protecteur selon une ou plusieurs des revendications 1 à 7, caractérisé en ce que la deuxième section ou section coulissante (6) du tunnel est munie d'une rebord de fermeture étanche (34) destiné à isoler à joint étanche l'espace compris entre les deux tunnels fixes (2, 4) lorsque la deuxième section ou section coulissante du tunnel se trouve dans sa position rétractée.

9. Dispositif de tunnel de transfert protecteur selon une ou plusieurs des revendications 1 à 8, caractérisé en ce que la première section ou section extérieure (2) du tunnel est munie à son extrémité libre d'un premier cadre de serrage fixe (35) qui pointe vers l'extérieure et d'une deuxième cadre de serrage (36) qui point également vers l'extérieur et est monté mobile, par rapport au premier cadre de serrage, le long de la première section ou section extérieure du tunnel.

**Patentansprüche**

1. Anordnung einer geschützten Tunneldurchreiche zum Durchreichen von (Wert-)Gegenständen von einer Station zu einer anderen Station, umfassend eine in einer Wandöffnung der einen Station montierte erste rohrförmige Sektion (2), eine verschiebbar in der ersten rohrförmigen Sektion montierte zweite rohrförmige Sektion (6), und Verschlussmittel (7) zum wahlweisen Verschliessen oder Oeffnen des Durchreichekanals der Durchreicheanordnung, gekennzeichnet durch eine dritte Tunnelsektion (4), die innerhalb der ersten Tunnelsektion (2) und der zweiten Tunnelsektion (6) montiert ist, wobei die dritte Tunnelsektion (4) an ihrem einen Ende fest mit der ersten Tunnelsektion (2) verbunden und an ihrem anderen Ende mit einer das Verschlussmittel bildenden Türe (7) versehen ist, um die dritte Tunnelsektion (4) zu verschliessen, wobei die zweite Tunnelsektion (6) verschiebbar gegenüber dem genannten anderen Ende und gegenüber der ersten (2) und dritten (4) Tunnelsektion montiert ist.

2. Anordnung einer geschützten Tunneldurchreiche nach Anspruch 1, dadurch gekennzeichnet, dass die erste (2) und dritte (4) Sektion durch einen profilierten Verbindungsrahmen (5) miteinander verbunden sind, der derart ausgebildet ist, dass das genannte andere Ende der dritten Tunnelsektion (4) im wesentlichen stationär bezüglich der ersten Tunnelsektion (2) gehalten ist.

3. Anordnung einer geschützten Tunneldurchreiche nach Anspruch 1 oder 2, dadurch gekennzeichnet, dass die zweite Tunnelsektion (6) zusätzlich verschiebbar auf der dritten Tunnelsektion (4) montiert ist.

4. Anordnung einer geschützten Tunneldurchreiche nach einem oder mehreren der Ansprüche 1 bis 3, dadurch gekennzeichnet, dass die Türe (7) einen Schliessmechanismus (12) aufweist, mit welchem die zweite Tunnelsektion (6) gegenüber der dritten Tunnelsektion (4) sperrbar ist, zusätzlich zum Sperren der Türe (7) in der dritten Sektion (4).

5. Anordnung einer geschützten Tunneldurchreiche nach einem oder mehreren der Ansprüche 1 bis 4, dadurch gekennzeichnet, dass die verschiebbare zweite Tunnelsektion (6) eine Anschlagplatte (16) aufweist, in welcher ein Lock (15) an einer solchen Stelle angeordnet ist, dass es in eingefahrener Stellung der zweiten Tunnelsekton mit einem Bolzen (14) des Türschliessmechanismus (12) fluchtet.

6. Anordnung einer geschützten Tunneldurchreiche nach einem oder mehreren der Ansprüche 1 bis 5, dadurch gekennzeichnet, dass mit einem Sperrmechanismus (21) die verschiebbare zweite Tunnelsektion (6) in einer Anzahl ausgefahrener Stellungen verriegelbar ist.

7. Anordnung einer geschützten Tunneldurchreiche nach Anspruch 6, dadurch gekennzeichnet, dass der Sperrmechanismus (21) für die verschiebbare zweite Tunnelsektion (6) eine an der Innenseite der äusseren, ersten Tunnelsektion (2) montierte Zahnstange (22) sowie einen Zugriegel (23) umfasst, die mit der zweiten verschiebbaren Tunnelsektion (6) verbunden ist und einen Riegelbolzen (25) aufweist, der gegen die Kraft einer Feder (27) axial verschiebbar ist, wobei das eine Ende des Riegelbolzens (25) durch einen Schlitz (26) in der inneren, dritten Tunnelsektion (4) ragt, der parallel zur Zahnstange verläuft, wobei das andere Ende auf einer Arretierung (29) ruht, wenn die zweite verschiebbare Tunnelsektion (6) in ihrer eingefahrenen Stellung ist und wobei in ausgefahrener Stellung der zweiten verschiebbaren Tunnelsektion der Riegelbolzen (25) hinter einem der Zähne (30) der Zahnstange (22) einrastet, um die verschiebbare zweite Tunnelsektion in Einfahrsrichtung zu sperren.

8. Anordnung einer geschützten Tunneldurchreiche nach einem oder mehreren der Ansprüche 1 bis 7, dadurch gekennzeichnet, dass die verschiebbare zweite Tunnelsektion (6) einen Dichtungsflansch (34) aufweist, um den Zwischenraum zwischen den beiden ortsfesten Tunnelsektionen (2, 4) in eingefahrener Stellung der zweiten verschiebbaren Tunnelsektion abzudichten.

9. Anordnung einer geschützten Tunneldurchreiche nach einem oder mehreren der Ansprüche 1 bis 8, dadurch gekennzeichnet, dass die äussere, erste Tunnelsektion (2) an ihrem freien Ende einen ersten, fest verbundenen nach aussen gerichteten Montagerahmen (35) sowie einen zweiten ebenfalls nach aussen ragenden Montagerahmen (36) aufweist, welcher bezüglich des ersten Montagerahmens längs der äusseren, ersten, Tunnelsektion verschiebbar montiert ist.

FIG.1

FIG.2

FIG.3

FIG.4

FIG.5